# EUROPEAN PATENT SPECIFICATION

(11) **EP 0 565 580 B1**
(45) Date of publication and mention of the grant of the patent: **04.10.1995**
(21) Application number: 92902346.3
(22) Date of filing: 30.12.1991
(51) Int. Cl.: B25B 27/06

(54) **A METHOD FOR PULLING BEARINGS, A BEARING PULLER AND USE THEREOF**
VERFAHREN ZUM HERAUSZIEHEN VON LAGERN, EINE LAGERZIEH-VORRICHTUNG UND DEREN GEBRAUCH
PROCEDE D'EXTRACTION DE ROULEMENTS, APPAREIL ASSOCIE, ET UTILISATION DE CELUI-CI

(30) Priority: 02.01.1991 SE 9100004
(43) Date of publication of application: 20.10.1993
(73) Proprietor: SJOBOM, Börje, S-864 Matfors (SE)
(72) Inventor: SJOBOM, Börje, S-864 Matfors (SE)
(74) Representative: Bjerkén, Jarl Hakan
(86) International application number: PCT/SE91/00918
(87) International publication number: WO 92/11976

(56) References cited:
- CH-A- 421 018
- US-A- 3 763 539
- US-A- 4 471 517
- DERWENT'S ABSTRACT No. G67 43 B/31, SU 629 055, publ. week 7931 (SANITARY TECH)
- WKS).

## Description

The present invention relates to an apparatus for pulling rolling bearings from a retainer, in which the outer ring of the bearing in question is clamped up, and a shaft received in the inner ring of the bearing, according to preamble of the appended claim 1, as well as a use of such an apparatus and a method for such bearing pulling.

According to definition rolling bearings comprises ball bearings as well as roller bearings, although the invention is particularly well suitable for pulling roller bearings in general and spherical radial roller bearings in particular.

Rolling bearings may in some cases be clamped up by press fit in a retainer therefor, said retainer may for example be an end of a drying cylinder in a paper-making machine, and after a use over a longer time (perhaps over decades) and a need to change the bearing because of an irregular run caused by wearing, with possibly creation of noises as a result, the bearing in question is often through its outer ring very firmly stuck in the retainer. It is desired to be able to change the bearing without having to move the bearing retainer and pull it away from the shaft extending therethrough and through the bearing, since especially in the case of bearings within the industry the stops of the operation have to be made so short as possible so as to keep the costs thereof low.

Pulling apparatuses for rolling bearings are already known by the CH patent publication 421 018 and the European patent application 0087895, said apparatuses having gripping means gripping the outer ring of the bearing and the inner ring as well as the outer ring of the bearing, respectively, so as to pull the bearing away from a retainer therefor (see especially said European patent application). However, these apparatuses may only be used to pull ball bearings, and the gripping means thereof do not grip the bearing in such a way that they manage to pull bearings being very firmly clamped up through their outer ring in a retainer.

By way of example it may be mentioned that for spherical radial roller bearings are used for drying cylinders in paper-making machines, said bearings being clamped up in ends or gables fixed on both sides of the cylinder in base plates. Apparatuses of the already known types mentioned above do not manage to pull any such bearing from the retainer (the gables) with the shaft projecting through the gable and the bearing, not at least depending on the circumstance that no acceptable grip may be obtained in any of the races of the bearing of this type. The mode of procedure used hitherto for changing such bearings has consisted of firstly disassembling the gable in question from the base plate and removing the gable from the cylinder by pulling it over the shaft end thereof and after that press or strike the bearing out of the gable with a suitable tool. A new bearing is after that pressed into the gable and this is moved over the shaft and secured to the base plate again. This procedure is very time-consuming, in particular since it may lead to dismounting and mounting of parts of the driving arrangement for the driving of the shaft, and it generates beside high direct costs related to payment of workers for carrying out the bearing change a stop of the operation which may cost much more.

### BRIEF DESCRIPTION OF THE INVENTION

The object of the present invention is to provide an apparatus, a use and a method of the types mentioned in the introduction, which lead to a considerably more efficient pulling of rolling bearings from a retainer, in which the outer ring of the bearing in question is clamped up, than has been possible before and also allow pulling off rolling bearings, especially roller bearings being very firmly clamped up.

According to the invention this object is obtained by providing an apparatus, a method and a use defined in the appended claims 1, 15 and 17, respectively.

By the fact that the apparatus has at least one gripping means arranged to be inserted into the bearings between the outer and the inner ring into the space between two rolling elements arranged consecutively in the circumferential direction of the rings and it has a projection arranged to, after the insertion, be moved substantially in the circumferential direction of the rings in behind one of said rolling elements, a force pulling the bearing may be applied on the very rolling element. This makes it possible to pull bearings clamped up very firmly through the outer ring thereof in a retainer, since a very good grip is obtained by the gripping means because it grips behind a rolling element being a part of the bearing. The pulling of the rolling element leads to that this in its turn pulls or more correctly expressed pushes in front thereof, the two rings between which it is held. Since the gripping means does not grip any of the rings directly, the apparatus may accordingly be used to pull bearings with races having no actual surface or edge to grip, such as roller bearings, especially spherical radial roller bearings.

Thanks to the way in which the gripping means is designed to grip, namely from the space between the rolling elements substantially in the circumferential direction of the rings in behind the one rolling element, the rolling element may be gripped in spite of that the bearing is intact with both race rings on place.

According to a prefered embodiment of the invention the apparatus comprises at least a support member arranged to, when the gripping means is inserted in said space and the projection is moved behind the one rolling element, be pressed into said space between the gripping means and the other rolling element defining the space together with said one rolling element, said support member being adapted to bear substantially in a circumferential direction of the rings against the other rolling element as well as against the gripping means and by abutment on the other rolling element hold the gripping means in bearing action against and with the projection behind said one rolling element. The gripping means may by that be held against leaving the engagement by means of the projection thereof with the rolling element upon exerting a compressive force thereon.

According to another preferred embodiment of the invention the device comprises a plurality of gripping means arranged to grip the bearing at points regularly distributed over the periphery of the bearing, a support member being preferably arranged to cooperate with each gripping means.

Further advantages and preferred characteristics of the invention will appear from the following description and the other dependent claims.

### BRIEF DESCRIPTION OF THE DRAWINGS

With reference to the appended drawings below follows a specific description of a preferred embodiment of the present invention cited as an example.

In the drawings:
Fig 1 is a very schematic view illustrating a possible use of an apparatus according to the invention,
Fig 2 is an enlarged, partly sectioned view of a part of the apparatus shown in Fig 1 applied to a spherical radial roller bearing with a part of the outer race ring of the bearing being broken away for illustrating the application of a gripping means between the two rings,
Fig 3 is a perspective view of a gripping means included in the apparatus according to Fig 1,
Fig 4 is a perspecitive view of a support member adapted for cooperation with the gripping means in Fig 3, and

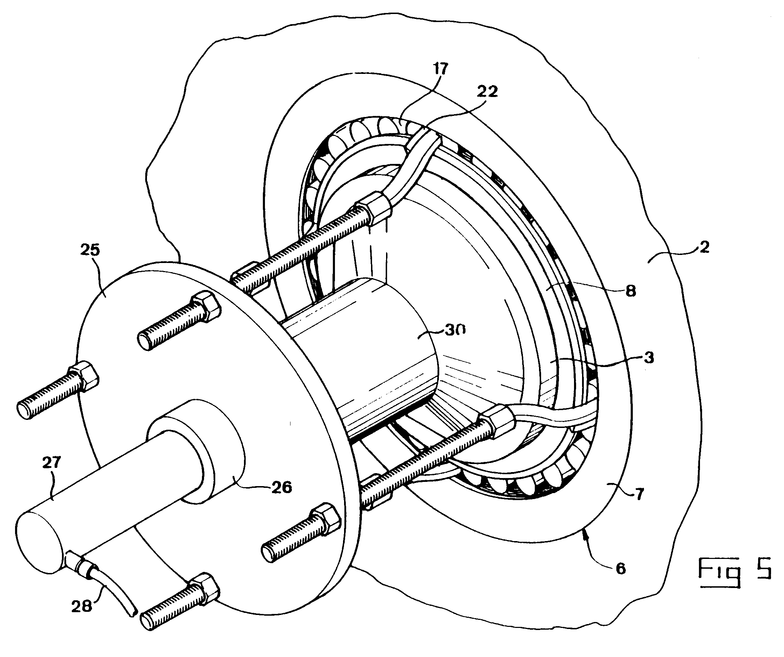

Fig 5 is a perspective view illustrating a part of the apparatus according to Fig 1 in an operation position for pulling a spherical radial roller bearing from a retainer therefor.

### DETAILED DESCRIPTION OF A PREFERRED EMBODIMENT OF THE INVENTION

A preferred embodiment of the apparatus according to the invention will be described hereafter by way of an example in connection with pulling a spherical radial roller bearing from a retainer 2 fixed to the base plate 1 for mounting the shaft 3 of a drying cylinder 4 of a paper-making machine in bearings. The new apparatus 5 is applied to one of the retainers 2 for removing the bearing retained therein, wherein the shaft 3 of the drying cylinder 4 at the opposite side thereof is mounted in bearings by a bearing in a similar retainer.

Reference is now made to all Figs. The bearing 6 consists of an outer race ring 7, an inner race ring 8 movably arranged with respect thereto as well as rollers 9 rotatably arranged between the rings, said rollers being held in pairs 10 of rollers arranged substantially behind each other as seen in the axial direction of the bearing by roller carriers guided along a flange 11 of the inner ring 8. Said roller carriers hold two roller pairs arranged consecutively in the circumferential direction at a substantially constant distance from each other. The rollers roll on one hand on the curved surfaces on the inner ring and on the other on the spherical roller way 12 of the outer race ring. A bearing of this type has a very high capacity of radial and axial support. The outer ring 7 is by means of press fit clamped up in the retainer 2 and may be stuck very firmly in the latter. The inner ring 8 may rotate with respect to the outer one while the rollers 9 are running on the spherical roller way or path 12. The inner ring may be fixed to the shaft 3 by a clamping sleeve not shown, said clamping sleeve then being loosened before the pulling operation, so that the inner ring becomes freely movable with respect to the shaft at the moment of the pulling.

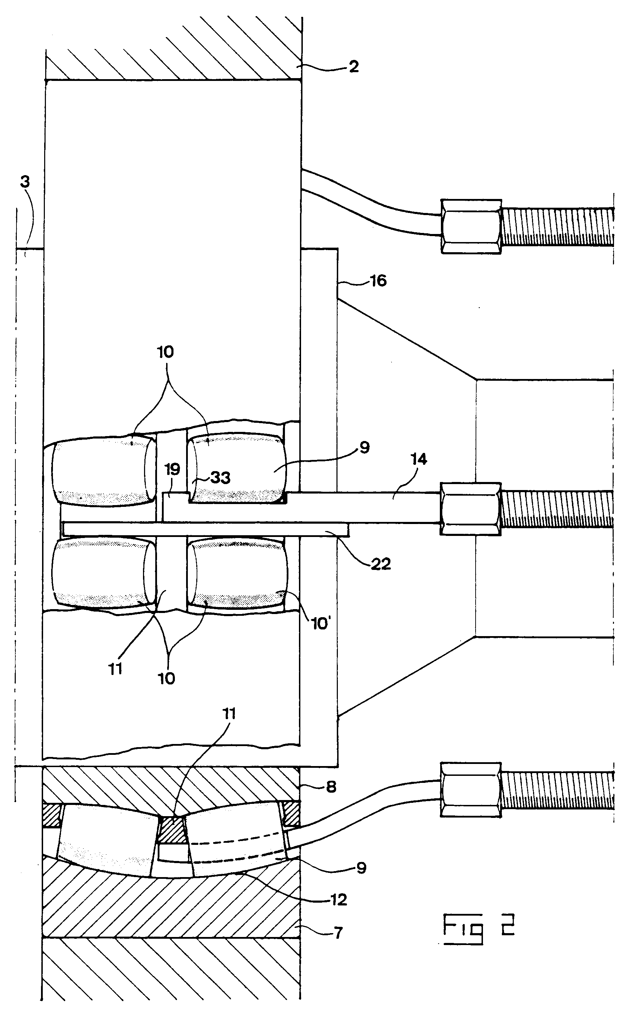

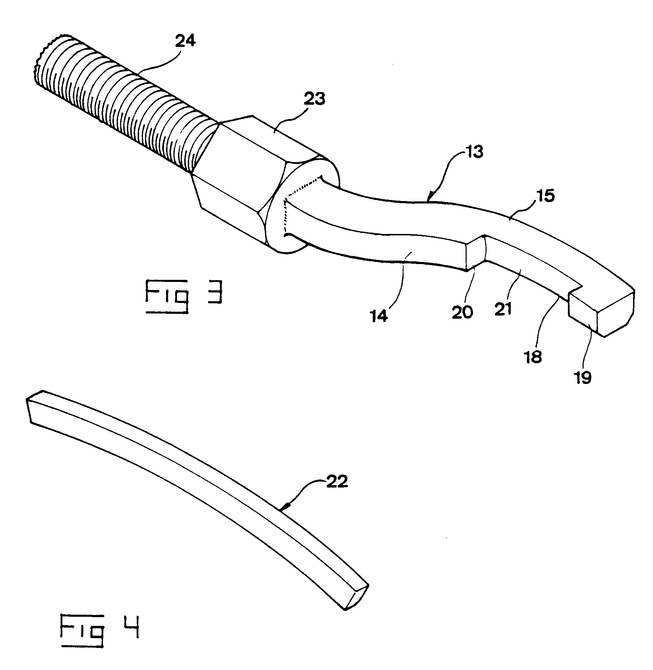

The bearing pulling apparatus according to the invention has gripping means 13 in the form of a gripping arm 14, the outer portion 15 of which adapted for insertion into a space between two rollers of the bearing has an arc shape directed substantially radially and designed to allow the arm 4 to reach in behind a roller without hitting and being stopped by any of the rings or roller carriers of the bearing. Said arc shape of the gripping arm corresponds substantially to the arc shape of the spherical roller way 12 of the bearing (see dashed lines at the bottom of Fig 2).The gripping arm 14 is adapted to be pushed substantially axially from the shaft end 16 projecting out of the bearing into the bearing between the outer and inner ring into the space 17 between two rollers 9 arranged consecutively in the circumferential direction of the rings. The gripping arm 14 has a recess 18, which is arranged to by means of the delimiting walls thereof bear against a roller as seen in the pulling direction behind, by a projection 19 formed by the recess, and in front of, by the surface 20 shown in Fig 3, the roller as well as against the envelope surface thereof directed towards said space by the bottom wall 21 thereof (see also Fig 2).

It is intended that the gripping arm 14 shall be inserted into said space in a substantially axial direction into a position in which the projection 19 is located further rearwardly than and in the circumferential direction of the rings laterally with respect to the rolling element located closest, whereupon the projection is arranged to be brought behind said rolling element by moving the arm 14 transversally to the extension thereof substantially in the circumferential direction of the rings towards the rolling element 9 into the position shown in Fig 2 by said cutting away. The apparatus also comprises a support member 22 or support wedge, which also has a radially directed arc shape, which substantially corresponds to the arc shape of the gripping arm, but which when the support member is inserted into the bearing extends in a substantilly axial direction through substantially the entire bearing. The support member is adapted to be pushed in between the gripping means arranged in the gripping position (see Fig 2) and the two rollers arranged axially consecutively of the roller pair 10, which lies in the space in the direction opposite to the roller 9' gripped around. The support member 22 has preferably a width substantially in the circumferential direction of the rings which is slightly larger than the remaining space between the gripping arms 14 and the other rolling element 10' in the pulling position of the gripping means. This means that the support member has to be driven by a certain power into the space between the gripping arm 14 and the rollers of the roller pair 10, so that it functions as a wedge by pressing these rollers and the gripping arm slightly apart so as to be held under pretension therebetween against leaving the position thereof. Owing to the fact that the support member 22 bears against both of the axially consecutive rollers of the roller pair 10, a very stable support for holding the gripping arm in place is obtained. It appears from Fig 3 that the gripping means has lateral chamferings so as to go free from the roller carrier in connection to which it is intended to be arranged. The support member has also a chamfering along the longitudinal edge adapted to be directed towards the inner race ring and away from the gripping means (thus, the lowest - most far away one in Fig 4), but this chamfering does hardly appear in Fig 4. The chamfering of the support member has the same object as those of the gripping means, and these chamferings make it possible to increase the radial thickness of the gripping means and the support member in the pulling position thereof, since the roller carriers may not restrict this to the same great extent as in absence of chamferings.

It is meant that it shall be possible to pull the bearing from the retainer 2 and the shaft 3 by applying a pulling or tractive force on the gripping arm 14, which is transformed through the projection 19 into a compressive force acting on the rear side 33 of the roller gripped thereby in the direction of the shaft end 16. Owing to the fact that the gripping arm bears against and gets support from the roller behind and in front thereof as well as along the envelope surface thereof and the support member or wedge presses the gripping means in place, it is possible to transmit great forces through the projection 19 without causing it to slide out of its engagement with the roller. How these forces are provided will be described furtheron.

A high nut 23 is fixed to the end of the gripping arm located opposite to the projection 19. A threaded axle pin 24 may be screwed into this nut, so that the gripping arm may be connected and secured to a carrier 25 in the form of a plate, here circular. A plurality, here four, axle pins 24 are evenly distributed along the carrier 25 secured thereto, each of which is connected to a gripping arm, as the one shown in Fig 3, for inserting gripping means into spaces substantially evenly distributed over the circumference of the bearing. In this way no uneven loads are generated on the bearing on attempting to pulling thereof, which may possibly cause a lot of seizures. Since the gripping means are loosenably secured to the respective axle pin they may easily be changed, and it will be possible to shift between gripping arms of different dimensions and arc shape in dependence of the size of the bearings to be pulled off. Support members with dimensions and arc shapes suitable to each bearing are then of course also provided.

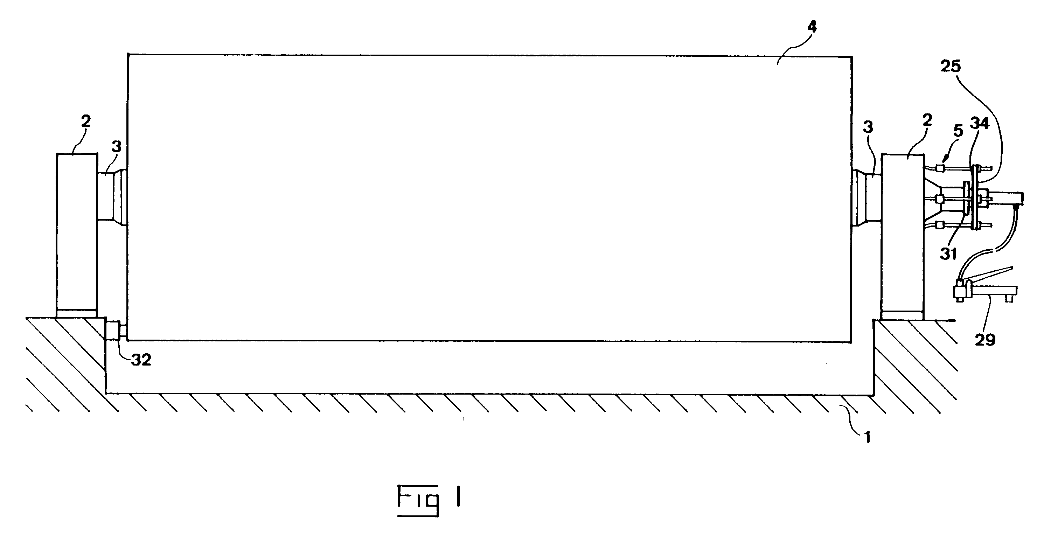

Axle pins 24 are adjustably attached to the carrier 25 through nuts so as to adapt the position of the carrier with respect to the bearing to that desired in every occuring situation. The carrier 25 has a sleeve 26 substantially axially directed with respect to the shaft 3 in the operation position thereof, in which a power means in the form of an hydraulic cylinder 27 is adapted to be attached. The hydraulic cylinder is through a fluid conduit 28 connected to a hydraulic pump 29 schematically indicated in Fig 1. A shaft bit 30 extends axially from the shaft 3 and is secured thereto. This has an inner channel for vapour and condensate, for what reason it is closed by means of a support plate 31 (see Fig 1). A member 34 displaceable by means of the piston of the hydraulic cylinder 27 in the direction towards the shaft 3 is arranged to bear against said support plate. Finally, an abutment 32 in the form of a short hydraulic cylinder is arranged at the opposite end of the drying cylinder 4 between the base plate 1 and the drying cylinder 4, so as to make a displacement of the drying cylinder 4 and by that the shaft 3 in the direction of the gable 2 located to the left in Fig 1 impossible.

The function of the apparatus described above is the following: When pulling a bearing the gripping arms 14 are firstly inserted into said space 17 and hooked behind the rollers. The support members 22 are after that struck in so as to hold the respective gripping arm. The gripping arms are then connected to the carrier 25 through the axle pins 24 and the support plate 31 is applied on the shaft bit 30. The pulling of the bearing may be started when this has been done. The hydraulic pump 29 is actuated to deliver compressed fluid to the hydraulic cylinder 27, the piston of which is pressed in the direction towards the carrier 25 and presses by that said member 34 against the support plate 31. The power means uses in this way the support plate 31 as an abutment for pressing the carrier 25 in the axial direction away from the shaft bit 30, the shaft 3 and the retainer 2. This leads to a pulling force in every gripping arm, which is transformed into a compressive force applied through each projection 19 on the rear side of the respective roller, which tends to press the roller and by that the bearing out of the retainer. Thus, the bearing will be pulled out of the retainer by the removal of the carrier 25 from the shaft bit 30.

It would of course also be possible to arrange a power means to act between a carrier and the retainer itself instead of the carrier and the shaft, which is the case here. A condition there-for is of course that the retainer can stand such forces, which are then also not that easy to apply without harmful uneven loads. Any type of carrying or lifting means is preferably arranged to hold the shaft 3 and the drying roll against the gravity when pulling the bearing and until the new bearing is put into place.

It would of course also be possible that the gripping arms already from the beginning were arranged on the axle pins when inserting the gripping arms into the spaces between the outer and inner ring and the entire apparatus with the carrier 25 is thereafter turned so as to bring the projections behind the respective roller. However, the application of the support members would probably in such a case be a little bit more complicated.

By utilizing the apparatus according to the invention bearings of the type described above, which may be dimensioned to receive shafts of the diameter of for example 600 mm, may rapidly and efficiently be removed from the retainer so as to be changed for a new one while avoiding long operation stops, since the retainer 2 can remain firmly mounted to the base plate 1 during the entire pulling operation.

The invention is of course not restricted to the embodiment described above, and several modifications thereof would be apparent for a man skilled in the art without departing from the scope of the appended claims.

Although the invention is particularly suited for pulling spherical roller bearings, it may of course advantageously be utilized for pulling other types of rolling bearings, primarily roller bearings.

It would of course be possible to design the gripping arm in a different way, for example by giving up the recess and arrange a projection extending substantially perpendicularly from the arm at the end thereof and possibly another projection closer to the centre thereof for receiving support by a front side of a roller.

The power means could of course be of any suitable type, for example an electrically driven screw, and it would even be possible to apply it in the form of an axle threadedly received in the carrier and able to be screwed through the carrier by manpower so as to remove this from the retainer and by that pull the bearing out thereof, when smaller bearings are to be pulled.

The support member could be shorter and only bear against one rolling element.

The projection of the gripping means could have another design than shown under adaption to the shape of that rolling element which is intended to be gripped, and such gripping and power transmission to the rolling element caused thereby may of course take place in a direction being slightly inclined with respect to the shaft received in the bearing.

## Claims

1. An apparatus for pulling rolling bearings (6) from a retainer (2), in which the outer ring (7) of the bearing in question is clamped up, and a shaft (3) is received in the inner ring (8) of the bearing, said apparatus comprising a device arranged to grip the bearing and be subjected to a pulling force in the direction of the shaft end (16) extending through the bearing for pulling the bearing from the retainer,
**characterized** in that the gripping device comprises at least one gripping means (13) arranged to from said shaft end be inserted into the bearing between said outer and inner ring in the space (17) between two rolling elements (9', 10') arranged consecutively in the circumferential direction of the rings, and that the gripping means has a projection (19) arranged to, after inserting the gripping means into said space, be moved substantially in the circumferential direction of the rings in behind one of said rolling elements (9') and upon pulling the gripping means transform the pulling force into a compressive force acting on the rear side (33) of the rolling element and by that on the bearing.

2. An apparatus according to claim 1,
**characterized** in that the gripping means (13) is formed by an arm (14) adapted to be moved substantially axially into said space (17) and having at the end thereof said projection (19) arranged to, when the arm is moved into said space, project from the rest of the arm substantially in the circumferential direction of the rings.

3. An apparatus according to claim 2,
**characterized** in that the arm (14) and the projection (19) are designed to be inserted into said space into a position in which the projection is located further rearwardly than the rolling element (9') located closest and in the circumferential direction of the rings beside this, and that the projection is arranged to be brought behind this rolling element by moving the arm (14) transversally to the extension thereof substantially in the circumferential direction of the rings towards the rolling element (9').

4. An apparatus according to any of the claims 1-3,
**characterized** in that is comprises at least a support member (22) arranged to, when the gripping means (13) is inserted in said space (17) and the projection (19) is brought behind said one rolling element (9'), be pressed into said space between the gripping means and the other rolling element (10') defining said space together with said one rolling element, and that the support member is adapted to bear substantially in the circumferential direction of the rings against the other rolling element as well as the gripping means and by abutment on the other rolling element hold the gripping means to bear against and by the projection (19) behind said one rolling element (9'), so that the projection can not leave the bearing action thereof against the rear side (33) of said one rolling element upon application of said compressive force thereon.

5. An apparatus according to claim 2 and possibly 3 or 4,
**characterized** in that the gripping arm (14) is adapted to in the pulling position thereof bear against and follow the shape of the rolling element (9') behind and in front of the rolling element as seen in the pulling direction as well as against the side turned to said space (17).

6. An apparatus according to any of the preceding claims,
**characterized** in that it is adapted for pulling roller bearings having rollers as rolling elements.

7. An apparatus according to claims 2 and 6 and possibly any of claims 3-5,
**characterized** in that the arm (14) has a recess (18) arranged to in the pulling position thereof through the delimiting walls thereof bear against a roller (9') behind and in front of the roller as seen in the pulling direction as well as against the envelope surface thereof directed to said space (17) and form said projection (19) by a delimiting wall thereof belonging thereto and bearing against the rear side of the roller.

8. An apparatus according to claims 2 and 6 and possibly any of the preceding claims,
**characterized** in that it is adapted for pulling spherical radial roller bearings, and that the projection (19) is arranged to be moved in behind and transmit said compressive force to the roller (9') located closest to said shaft end (16) of a pair (10) of rollers arranged at a mutual distance in the direction of the shaft.

9. An apparatus according to claim 8,
**characterized** in that the portion (15) of the arm (14) adapted to be inserted into said space (17) has an arc shape directed substantially radially and designed to allow the arm to reach behind said roller (9') without hitting and be stopped by any of the rings (7, 8) or the roller carriers of the bearing.

10. An apparatus according to claims 4 and 8 and possibly any of the other preceding claims,
**characterized** in that the support member (22) is designed to, when it is inserted into said space (17), bear against both axially consecutively arranged rollers of a pair (10) of rollers being arranged axially beside each other and movable along a spherical surface of the outer ring and in the opposite direction against the gripping arm, and that the support member (22) has an arc shape directed substantially radially and adapted to allow the support member to extend substantially axially substantially through the bearing.

11. An apparatus according to any of the claims 4 and 10,
**characterized** in that the width of the support member substantially in the circumferential direction of the rings is slightly larger than the remaining space between the gripping means (13) and the other rolling element (10) in the pulling position of the gripping means, and that the support member (22) is arranged to function as a wedge by being inserted into said space (17) while pressing the other rolling element and the gripping means apart so as to be held under pretension therebetween against leaving its position.

12. An apparatus according to any of the preceding claims,
**characterized** in that the gripping device comprises a carrier (25) with respect to which a plurality of gripping means (13) are attachable, and that the carrier is arranged to hold the gripping means inserted into spaces (17) substantially regularly distributed over the circumference of the bearing.

13. An apparatus according to claim 12,
**characterized** in that the apparatus comprises a power means (27) arranged to act between said carrier (25) and the bearing retainer (2) or the shaft end (16) so as to remove the carrier (25) and by that the bearing (6) from the bearing retainer (2).

14. An apparatus according to claim 13,
**characterized** in that the power means (27) is fixed to the carrier (25) and arranged to press an extendable member (34) in axial direction against said shaft end (16) so as to use the latter as an abutment when pressing the carrier (25) in the axial direction away from the bearing retainer (2).

15. A method for pulling rolling bearings (6) from a retainer (2), in which the outer ring (7) of the bearing in question is clamped up, and a shaft (3) is received in the inner ring (8) of the bearing, said bearing being gripped by means of a device and a pulling force is applied to the gripping device in the direction of the shaft end (16) extending through the bearing for pulling the bearing from the retainer,
**characterized** by the following steps
a) a gripping means (13) having a projection (19) and included in the gripping device is inserted from said shaft end into the bearing between said outer and inner ring in the space (17) between two rolling elements (9', 10') arranged consecutively in the circumferential direction of the rings,
b) a projection (19) of the gripping means is after that moved substantially in the circumferential direction of the rings in behind one of said rolling elements (9'), and
c) a pulling force is then applied on the gripping means in the direction of said shaft end (16), so that this pulling force is transformed through the latter into a compressive force acting on the rear side (33) of the rolling element and by that on the bearing.

16. A method according to claim 15,
**characterized** in that between said steps b) and c) a support member (22) is pressed into said space (17) between the gripping means and the other rolling element (10') defining said space together with said one rolling element, so that the support member comes to bear substantially in the circumferential direction of the rings against the other rolling element as well as the gripping means and by abutment on the other rolling element holds the gripping means to bear against and with the projection (19) behind said one rolling element (9'), so that the projection can not leave the bearing action thereof against the rear side (33) of said one rolling element on application of said compressive force thereon.

17. A use of the apparatus according to any of the claims 1-14 for pulling rolling bearings (6) from a retainer (2), in which the outer ring (7) of the bearing in question is clamped up, and a shaft (3) is received in the inner ring (8) of the bearing.

18. A use according to claim 17,
**characterized** in that it is spherical radial roller bearings which are pulled off.

## Patentansprüche

1. Vorrichtung zum Herausziehen von Wälzlagern (6) aus einem Lagerhalter (2), in den der äußere Ring (7) des betroffenen Lagers eingeklemmt ist, wobei eine Welle (3) in den inneren Ring (8) des Lagers aufgenommen ist; mit einer Einrichtung zum Ergreifen des Lagers, welche einer Zugkraft in Richtung des Wellenendes (16) aussetzbar ist, das sich durch das Lager erstreckt, um das Lager von dem Halter abzuziehen, dadurch **gekennzeichnet,** daß die Greifeinrichtung wenigstens ein Greifmittel (13) aufweist, das vom Wellenende her einsetzbar ist in das Lager hinein zwischen den äußeren und den inneren Ring in den Raum (17) zwischen zwei Wälzkörpern (9', 10'), die in Umfangsrichtung der Ringe aufeinanderfolgen; und daß das Greifmittel einen Vorsprung (19) hat, der nach dem Einsetzen des Greifmittels in jenen Raum im wesentlichen in Umfangsrichtung der Ringe hinter einen der Wälzkörper (9') bewegbar ist und beim Ziehen des Greifmittels die Zugkraft in eine Druckkraft umwandelt, die auf die Rückseite (33) des Wälzkörpers und dadurch auf das Lager wirkt.

2. Vorrichtung nach Anspruch 1, dadurch **gekennzeichnet**, daß das Greifmittel (13) durch einen Arm (14) gebildet ist, der im wesentlichen axial in jenen Raum (17) bewegbar ist und an dessen Ende jener Vorsprung (19) in der Weise anzuordnen ist, daß dieser beim Bewegen des Armes in jenen Raum im wesentlichen in Umfangsrichtung der Ringe vom Rest des Armes absteht.

3. Vorrichtung nach Anspruch 2, dadurch **gekennzeichnet**, daß der Arm (14) und der Vorsprung (19) so gestaltet sind, daß sie in jenen Raum in eine Lage versetzbar sind, in welcher der Vorsprung weiter hinten als der am nächsten liegende Wälzkörper (9') angeordnet ist und in Umfangsrichtung der Ringe neben diesem; und daß der Vorsprung hinter diesen Wälzkörper bringbar ist durch Bewegung des Arms (14) quer zu dessen Erstreckung im wesentlichen in Umfangsrichtung der Ringe auf den Wälzkörper (9') zu.

4. Vorrichtung nach einem der Ansprüche 1 bis 3, dadurch **gekennzeichnet**, daß wenigstens ein Stützteil (22) vorgesehen ist, das beim Einsetzen des Greifmittels (13) in jenen Raum (17) und Einbringen des Vorsprungs (19) hinter jenen einen Wälzkörper (9') in jenen Raum preßbar ist zwischen das Greifmittel und den anderen Wälzkörper (10'), der jenen Raum zusammen mit jenem einen Wälzkörper bestimmt; und daß das Stützteil im wesentlichen in Umfangsrichtung der Ringe sowohl an den anderen Wälzkörper als auch an das Greifmittel anlegbar ist und durch Anschlag am anderen Wälzkörper das Greifmittel hält, um anzuliegen, und durch den Vorsprung (19) hinter jenem einen Wälzkörper (9'), so daß der Vorsprung seinem Anlagevorgang gegen die Rückseite (33) jenes einen Wälzkörpers beim Anwenden jener Druckkraft darauf nicht ausweichen kann.

5. Vorrichtung nach Anspruch 2 und möglicherweise 3 oder 4, dadurch **gekennzeichnet**, daß der Greifarm (14) in seiner Zuglage sowohl an den Wälzkörper (9') legbar ist und dessen Form folgt hinter und vor dem Wälzkörper, gesehen in Zugrichtung, als auch an die jenem Raum (17) zugewandte Seite legbar ist.

6. Vorrichtung nach einem der vorhergehenden Ansprüche, dadurch **gekennzeichnet**, daß sie zum Ziehen von Rollenlagern eingerichtet sind, die Rollen als Wälzkörper aufweisen.

7. Vorrichtung nach den Ansprüchen 2 und 6 sowie möglicherweise einem der Ansprüche 3 bis 5, dadurch **gekennzeichnet**, daß der Arm (14) eine Aussparung (18) hat, die in ihrer Zuglage mittels ihrer begrenzenden Wände sowohl an eine Rolle (9') legbar ist hinter und vor der Rolle, in Zugrichtung gesehen, als auch an deren Mantelfläche legbar ist, die jenem Raum (17) zugewandt ist; und daß der Arm jenen Vorsprung (19) durch eine ihn begrenzende, dazu gehörende begrenzende Wand gestaltet, die an der Rückseite der Rolle anliegt.

8. Vorrichtung nach den Ansprüchen 2 und 6 und möglicherweise einem der vorhergehenden Ansprüche, dadurch **gekennzeichnet**, daß sie zum Ziehen von Radialpendelrollenlagern eingerichtet ist und daß der Vorsprung (19) hinter jene Rolle (9') bewegbar ist und jene Druckkraft darauf überträgt, welche jenem Wellenende (16) am nächsten liegt von dem Paar (10) Rollen, die in gegenseitigem Abstand in Wellenrichtung angeordnet sind.

9. Vorrichtung nach Anspruch 8, dadurch **gekennzeichnet**, daß der Teil (15) des Armes (14), welcher in jenen Raum (17) einsetzbar ist, eine Bogenform hat, die im wesentlichen radial gerichtet und so gestaltet ist, daß der Arm hinter jener Rolle (9') ankommen kann, ohne daß er anstößt und von einem der Ringe (7, 8) oder den Rollenträgern des Lagers angehalten wird.

10. Vorrichtung nach den Ansprüchen 4 und 8 sowie möglicherweise einem der vorhergehenden Ansprüche, dadurch **gekennzeichnet**, daß das Stützteil (22) so gestaltet ist, daß es beim Einsetzen in jenen Raum (17) an beiden axial aufeinanderfolgenden Rollen eines Paars (10) von Rollen anliegt, die axial nebeneinander angeordnet und entlang einer kugeligen Oberfläche des äußeren Ringes sowie in der entgegengesetzten Richtung gegen den Greifarm bewegbar sind; und daß das Stützteil (22) eine Bogenform hat, die im wesentlichen radial gerichtet und angepaßt ist, um dem Stützteil zu ermöglichen, sich im wesentlichen axial im wesentlichen durch das Lager zu erstrecken.

11. Vorrichtung nach Anspruch 4 oder 10, dadurch **gekennzeichnet**, daß die Breite des Stützteiles im wesentlichen in Umfangsrichtung der Ringe etwas größer ist als der verbleibende Raum zwischen dem Greifmittel (13) und dem anderen Wälzkörper (10), wenn dieses in seiner Zuglage ist; und daß das Stützteil (22) vorgesehen ist, um als Keil zu wirken, indem es in jenen Raum (17) eingesetzt wird, während es den anderen Wälzkörper und das Greifmittel wegdrückt, so daß es dazwischen unter Vorspannung gehalten wird gegen ein Verlassen seiner Lage.

12. Vorrichtung nach einem der vorhergehenden Ansprüche, dadurch **gekennzeichnet**, daß die Greifeinrichtung einen Träger (25) aufweist, an dem eine Mehrzahl von Greifmitteln (13) anbringbar ist; und daß der Träger eingerichtet ist, die Greifmittel in Räume (17) eingesetzt zu halten, welche im wesentlichen gleichmäßig über den Lagerumfang verteilt sind.

13. Vorrichtung nach Anspruch 12, dadurch **gekennzeichnet**, daß sie ein Arbeitsmittel (27) aufweist, das zur Wirkung zwischen jenem Träger (25) und dem Lagerhalter (2) oder dem Wellenende (16) angeordnet ist, um den Träger (25) und dadurch das Lager (6) vom Lagerhalter (2) zu entfernen.

14. Vorrichtung nach Anspruch 13, dadurch **gekennzeichnet**, daß das Arbeitsmittel (27) am Träger (25) befestigt und so angeordnet ist, daß ein verlängerbarer Teil (34) in axialer Richtung gegen jenes Wellenende (16) drückbar ist, wobei letzteres als Anschlag dient, wenn der Träger (25) in axialer Richtung von dem Lagerhalter (2) weggedrückt wird.

15. Verfahren zum Herausziehen von Wälzlagern (6) aus einem Lagerhalter (2), in den der äußere Ring (7) des betroffenen Lagers eingeklemmt ist, wobei eine Welle (3) in den inneren Ring (8) des Lagers aufgenommen ist, wobei jenes Lager mittels einer Einrichtung ergreifbar ist und eine Zugkraft auf die Greifeinrichtung in Richtung des Wellenendes (16) ausgeübt wird, das sich durch das Lager erstreckt, um das Lager von dem Halter abzuziehen, **gekennzeichnet** durch folgende Schritte:
**a**) ein Greifmittel (13) mit Vorsprung (19), der Greifeinrichtung wird von jenem Wellenende aus in das Lager eingesetzt zwischen den äußeren und den inneren Ring in den Raum (17) zwischen zwei Wälzkörpern (9', 10'), die in Umfangsrichtung der Ringe aufeinanderfolgend angeordnet sind,
**b**) danach wird ein Vorsprung (19) des Greifmittels im wesentlichen in Umfangsrichtung der Ringe hinter einen jener Wälzkörper (9') bewegt, und
**c**) dann wird eine Zugkraft auf das Greifmittel in Richtung jenes Wellenendes (16) ausgeübt, so daß diese Zugkraft durch letzteres in eine Druckkraft umgewandelt wird, die auf die Rückseite (33) des Wälzkörpers und dadurch auf das Lager wirkt.

16. Verfahren nach Anspruch 15, dadurch **gekennzeichnet**, daß zwischen den Schritten b) und c) ein Stützteil (22) in jenen Raum (17) zwischen das Greifmittel und den anderen Wälzkörper (10') gepreßt wird, der jenen Raum zusammen mit jenem einen Wälzkörper bestimmt, so daß das Stützteil im wesentlichen in Umfangsrichtung der Ringe sowohl an dem anderen Wälzkörper als auch an dem Greifmittel zur Anlage kommt und durch Anschlag am anderen Wälzkörper das Greifmittel in Anlage gegen und mit dem Vorsprung (19) hinter jenem Wälzkörper (9') hält, so dass der Vorsprung seinen Anlagevorgang gegen die Rückseite (33) jenes einen Wälzkörpers beim Anwenden jener Druckkraft darauf nicht ausweichen kann.

17. Gebrauch der Vorrichtung nach einem der Ansprüche 1 bis 14 zum Herausziehen von Wälzlagern (6) aus einem Lagerhalter (2), wobei der äußere Ring (7) des betroffenen Lagers eingeklemmt ist und eine Welle (3) in den inneren Ring (8) des Lagers aufgenommen ist.

18. Gebrauch nach Anspruch 17, dadurch **gekennzeichnet**, daß Radialpendelrollenlager herausgezogen werden.

## Revendications

1. Appareil pour extraire des roulements (6) d'une cage (2), dans laquelle la bague externe (7) du roulement en question est serrée, et un arbre (3) est reçu dans la bague interne (8) du roulement, ledit appareil comprenant un dispositif agencé pour saisir le roulement et pour être soumis à une force de traction dans la direction de l'extrémité d'arbre (16) s'étendant à travers le roulement pour extraire le roulement de la cage,
caractérisé en ce que le dispositif de préhension comprend au moins un moyen de préhension (13) agencé à partir de ladite extrémité d'arbre pour être inséré dans le roulement entre lesdites bagues externe et interne dans l'espace (17) entre deux éléments de roulement (9', 10') agencés de façon consécutive dans la direction circonférentielle des bagues, et en ce que les moyens de préhension présentent une saillie (19) agencée, après l'insertion des moyens de préhension dans ledit espace, pour être déplacée sensiblement dans la direction circonférentielle des bagues à l'arrière de l'un desdits éléments de roulement (9') et, lors de la traction des moyens de préhension, pour transformer la force de traction en une force de compression agissant sur le côté arrière (33) de l'élément de roulement et par cela sur le roulement.

2. Appareil selon la revendication 1,
caractérisé en ce que les moyens de préhension (13) sont formés par un bras (14) adapté pour se déplacer sensiblement axialement dans ledit espace (17) et ayant, à l'extrémité de celui-ci, ladite saillie (19) agencée pour faire saillie du reste du bras sensiblement dans la direction circonférentielle des bagues, quand le bras est déplacé dans ledit espace.

3. Appareil selon la revendication 2,
caractérisé en ce que le bras (14) et la saillie (19) sont conçus pour être insérés dans ledit espace dans une position dans laquelle la saillie est située plus loin en arrière que l'élément de roulement (9') situé le plus près et dans la direction circonférentielle des bagues à côté de celui-ci, et en ce que la saillie est agencée pour être amenée derrière cet élément de roulement en déplaçant le bras (14) transversalement à l'extension de celui-ci, sensiblement dans la direction circonférentielle des bagues vers l'élément de roulement (9').

4. Appareil selon l'une quelconque des revendications 1-3,
caractérisé en ce qu'il comprend au moins un organe de support (22) agencé pour, quand les moyens de préhension (13) sont insérés dans ledit espace (17) et la saillie (19) est amenée derrière ledit élément de roulement (9'), être pressé dans ledit espace entre les moyens de préhension et l'autre élément de roulement (10') définissant ledit espace avec ledit premier élément de roulement, et en ce que l'organe de support est adapté pour s'appliquer sensiblement dans la direction circonférentielle des bagues contre l'autre élément de roulement, ainsi que les moyens de préhension et, par aboutement sur l'autre élément de roulement, pour maintenir les moyens de préhension pour s'appliquer contre et par la saillie (19) derrière ledit élément de roulement (9'), de sorte que la saillie ne peut pas quitter l'action d'appui de celui-ci contre le côté arrière (33) dudit premier élément de roulement lors de l'application de ladite force de compression sur celui-ci.

5. Appareil selon la revendication 2 et éventuellement 3 ou 4,
caractérisé en ce que le bras de préhension (14) est adapté, dans la position de traction de celui-ci, pour s'appliquer contre et suivre la forme de l'élément de roulement (9') derrière et devant l'élément de roulement suivant la direction de traction, ainsi que contre le côté tourné vers ledit espace (17).

6. Appareil selon l'une quelconque des revendications précédentes,
caractérisé en ce qu'il est adapté pour tirer des roulements ayant des rouleaux comme éléments de roulement.

7. Appareil selon les revendications 2 et 6 et éventuellement une quelconque des revendications 3-5,
caractérisé en ce que le bras (14) présente un évidement (18) agencé, dans la position de traction de celui-ci, par les parois délimitant celui-ci, pour s'appliquer contre un rouleau (9') derrière et devant le rouleau suivant la direction de traction, ainsi que contre la surface d'enveloppe de celui-ci dirigée vers ledit espace (17), et pour former ladite saillie (19) par une paroi délimitant celle-ci appartenant à celle-ci et s'appliquant contre le côté arrière du rouleau.

8. Appareil selon les revendications 2 et 6 et éventuellement l'une quelconque des revendications précédentes,
caractérisé en ce qu'il est adapté pour extraire des roulements à rouleaux à rotules et en ce que la saillie (19) est agencée pour être déplacée en arrière et transmettre ladite force de compression au rouleau (9') situé le plus proche de ladite extrémité d'arbre (16) d'une paire (10) de rouleaux agencée à une distance mutuelle dans la direction de l'arbre.

9. Appareil selon la revendication 8,
caractérisé en ce que la partie (15) du bras (14), adaptée pour être insérée dans ledit espace (17), présente une forme arquée dirigée sensiblement radialement et conçue pour permettre au bras d'atteindre l'arrière dudit rouleau (9') sans heurter et être arrêté par une quelconque des bagues (7, 8) ou les supports de rouleaux du roulement.

10. Appareil selon les revendications 4 et 8 et éventuellement l'une quelconque des autres revendications précédentes,
caractérisé en ce que l'organe de support (22) est conçu, quand il est inséré dans ledit espace (17), pour s'appliquer contre les deux rouleaux agencés consécutivement axialement d'une paire (10) de rouleaux en étant agencés axialement à côté l'un de l'autre et mobiles le long d'une surface sphérique de la bague externe et dans la direction opposée contre le bras de préhension, et en ce que l'organe de support (22) présente une forme arquée dirigée sensiblement radialement et adaptée pour permettre à l'organe de support de s'étendre sensiblement axialement sensiblement à travers le roulement.

11. Appareil selon l'une quelconque des revendications 4 et 10,
caractérisé en ce que la largeur de l'organe de support, sensiblement dans la direction circonférentielle des bagues, est légèrement plus grande que l'espace restant entre les moyens de préhension (13) et l'autre élément de roulement (10) dans la position de traction des moyens de préhension, et en ce que l'organe de support (22) est agencé pour fonctionner comme un coin en étant inséré dans ledit espace (17) tout en pressant l'autre élément de roulement et les moyens de préhension en les écartant, afin d'être maintenus sous une pré-tension entre eux à l'encontre d'une sortie de position.

12. Appareil selon l'une quelconque des revendications précédentes,
caractérisé en ce que le dispositif de préhension comprend un support (25) par rapport auquel une pluralité de moyens de préhension (13) sont fixés de façon amovible et en ce que le support est agencé pour maintenir les moyens de préhension insérés dans des espaces (17) sensiblement régulièrement répartis sur la circonférence du roulement.

13. Appareil selon la revendication 12,
caractérisé en ce que l'appareil comprend des moyens de puissance (27) agencés pour agir entre ledit support (25) et la cage de roulement (2) ou l'extrémité de l'arbre (16), de façon à enlever le support (25) et, par cela, le roulement (6) de la cage de roulement (2).

14. Appareil selon la revendication 13,
caractérisé en ce que les moyens de puissance (27) sont fixés au support (25) et sont agencés pour presser un organe (34) apte à s'étendre dans la direction axiale contre ladite extrémité d'arbre (16) afin d'utiliser cette dernière comme une butée quand on presse le support (25) dans la direction axiale au loin de la cage de roulement (2).

15. Procédé pour extraire des roulements (6) d'une cage (2), dans laquelle la bague externe (7) du roulement en question est serrée, et un arbre (3) est reçu dans la bague interne (8) du roulement, ledit roulement étant saisi par l'intermédiaire d'un dispositif et une force de traction est appliquée au dispositif de préhension dans la direction de l'extrémité d'arbre (16) s'étendant à travers le roulement pour tirer le roulement de la cage,
caractérisé par les étapes suivantes :
a) des moyens de préhension (13) ayant une saillie (19) et inclus dans le dispositif de préhension sont insérés à partir de ladite extrémité d'arbre dans le roulement entre lesdites bagues externe et interne dans l'espace (17) entre deux éléments de roulement (9', 10') agencés consécutivement dans la direction circonférentielle des bagues,
b) une saillie (19) des moyens de préhension est après cela déplacée sensiblement dans la direction circonférentielle des bagues derrière l'un desdits éléments de roulement (9'), et
c) une force de traction est ensuite appliquée sur les moyens de préhension dans la direction de ladite extrémité d'arbre (16), de sorte que cette force de traction est transformée par cette dernière en une force de compression agissant sur le côté arrière (33) de l'élément de roulement et, par cela, sur le roulement.

16. Procédé selon la revendication 15,
caractérisé en ce que, entre lesdites étapes b) et c), un organe de support (22) est pressé dans ledit espace (17) entre les moyens de préhension et l'autre élément de roulement (10') définissant ledit espace ainsi que ledit premier élément de roulement, de sorte que l'organe de support vient s'appliquer sensiblement dans la direction circonférentielle des bagues contre l'autre élément de roulement ainsi que les moyens de préhension et, par aboutement sur l'autre élément de roulement, pour maintenir les moyens de préhension pour s'appliquer contre et avec la saillie (19) derrière ledit élément de roulement (9'), de sorte que la saillie ne peut pas quitter l'action d'appui de celui-ci contre le côté arrière (33) dudit élément de roulement par application de ladite force de compression sur celui-ci.

17. Utilisation de l'appareil selon l'une quelconque des revendications 1-14 pour extraire des roulements à rouleaux (6) d'une cage (2), dans laquelle la bague externe (7) du roulement en question est serrée, et un arbre (3) est reçu dans la bague interne (8) du roulement.

18. Utilisation selon la revendication 17,
caractérisée en ce que des roulements à rouleaux à rotules sont extraits.
